# EUROPÄISCHE PATENTANMELDUNG

(11) **EP 2 881 593 A1**
(43) Veröffentlichungstag der Anmeldung: **10.06.2015**
(21) Anmeldenummer: 14193744.1
(22) Anmeldetag: 18.11.2014
(51) Int. Cl.: F15B 1/24

(54) **Kolbenspeicher**

(30) Priorität: 25.11.2013 DE 102013019613; 12.12.2013 DE 102013020543
(71) Anmelder: Carl Freudenberg KG, 69469 Weinheim (DE)
(72) Erfinder: Pippes, Thomas, 56130 Bad Ems (DE)

(57) **Zusammenfassung**

Ein Kolbenspeicher, umfassend ein Gehäuse (1), welches einen Druckraum (2) begrenzt und einen verfahrbaren Kolben (3) aufnimmt, wobei im Druckraum (2) ein kompressibles Fluid aufgenommen ist, wobei der Kolben (3) eine Gehäuseseite (4) aufweist, welche dem Druckraum (2) zugewandt ist und wobei der Kolben (3) eine Arbeitsseite (5) aufweist, welche einem Arbeitsfluid zuwendbar ist, welches den Kolben (3) bewegen kann, ist im Hinblick auf die Aufgabe, einen Kolbenspeicher anzugeben, bei welchem eine gute Dichtung und Führung des Kolbens sichergestellt sind, selbst wenn der Durchmesser des Gehäuses eine Aufweitung erfährt, wobei die Festigkeit, das Gewicht und die Kosten des Kolbenspeichers möglichst optimiert sind, dadurch gekennzeichnet, dass eine Laufbuchse (6) vorgesehen ist, innerhalb welcher der Kolben (3) verfahrbar ist.

## Beschreibung

### Technisches Gebiet

Die Erfindung betrifft einen Kolbenspeicher gemäß dem Oberbegriff des Patentanspruchs 1.

### Stand der Technik

Aus dem Stand der Technik sind bereits derartige Kolbenspeicher bekannt. In deren Druckräumen werden Kolben verfahren, welche durch das Gehäuse geführt sind. Die Kolben werden gegen den Druck von Gasen verfahren.

In den Druckräumen dieser Kolbenspeicher sind häufig Gase unter sehr hohem Innendruck aufgenommen. Die Gehäuse dieser Kolbenspeicher müssen daher eine relativ hohe Steifigkeit aufweisen, damit eine Aufweitung deren Durchmesser aufgrund hoher Innendrücke vermieden wird.

Sofern es nämlich zu einer Aufweitung des Durchmessers kommt, kann eine Kolbendichtung ihre Wirkung nicht mehr in optimaler Weise entfalten. Des Weiteren kann die Führung des Kolbens innerhalb des Gehäuses nicht mehr gewährleistet sein.

Die Steifigkeit des Gehäuses wird in erster Linie durch die Wandstärke und den E-Modul des Werkstoffes bestimmt, aus dem das Gehäuse gefertigt ist.

Bei der Auslegung der hier beschriebenen Kolbenspeicher ist man häufig gezwungen, entweder höhere Wandstärken auszubilden als für eine ausreichende Festigkeit benötigt würde, oder aber Werkstoffe mit hohem E-Modul einzusetzen. Beide technologischen Wege führen zu erhöhten Kosten und erhöhtem Gewicht.

### Darstellung der Erfindung

Der Erfindung liegt daher die Aufgabe zugrunde, einen Kolbenspeicher anzugeben, bei welchem eine gute Dichtung und Führung dessen Kolbens sicher gestellt ist, selbst wenn der Durchmesser dessen Gehäuses eine Aufweitung erfährt, wobei die Festigkeit, das Gewicht und die Kosten des Kolbenspeichers möglichst optimiert sind.

Die vorliegende Erfindung löst die zuvor genannte Aufgabe durch die Merkmale des Patentanspruchs 1.

Erfindungsgemäß ist erkannt worden, dass der Kolben nicht durch das Gehäuse, sondern durch eine Laufbuchse geführt wird. Diese Laufbuchse ist teilweise oder vollständig von den unter Druck stehenden Fluiden, nämlich Flüssigkeiten oder Gasen, um- und/ oder durchströmt. Hierdurch wird die Laufbuchse durch angreifende Drücke nahezu nicht deformiert und ist weitgehend druckentlastet. Eine Aufweitung des Durchmessers der Laufbuchse wird daher vermieden. Wenn das Gehäuse zumindest teilweise eine Hülle für den Druckraum bildet, kann das Gehäuse so eine geringere Steifigkeit aufweisen, als eigentlich zur Herstellung einer Dicht- und Führungsfunktion für den Kolben erforderlich wäre. Es wird toleriert, dass der Durchmesser des Gehäuses sich ändert. Das Gehäuse kann daher relativ kostengünstig gefertigt werden. Auch kann dessen Wandstärke relativ gering sein, und die Wahl des Werkstoffs ist ebenfalls nicht stark limitiert. Insoweit ist ein Kolbenspeicher angegeben, bei welchem eine gute Dichtung und Führung des Kolbens sicher gestellt ist, selbst wenn der Durchmesser des Gehäuses eine Aufweitung erfährt, wobei die Festigkeit, das Gewicht und die Kosten des Kolbenspeichers möglichst optimiert sind.

Folglich ist die eingangs genannte Aufgabe gelöst.

Die Laufbuchse könnte teilweise oder vollständig innerhalb des Gehäuses aufgenommen sein. Hierdurch ist ein kompakter Aufbau des Kolbenspeichers möglich. Bevorzugt ragt die Laufbuchse nicht über die Außenabmessungen des Gehäuses hinaus.

Vorteilhaft ist das Gehäuse derart an eine Anordnung anbringbar, dass ein Arbeitsfluid wie beispielsweise eine Hydraulikflüssigkeit den Kolben gegen den Druck eines Gases im Druckraum bewegen kann.

Die Laufbuchse könnte eine äußere Oberfläche und eine innere Oberfläche aufweisen, wobei beide Oberflächen mit dem kompressiblen Fluid in Kontakt stehen oder durch dieses druckbeaufschlagt sind. Hierdurch können auf beide Oberflächen gleiche Drücke wirken, so dass die Laufbuchse teilweise oder vollständig druckentlastet ist. Eine Verbiegung oder Deformierung der Laufbuchse ist so nahezu ausgeschlossen. Lediglich das Material, aus dem die Laufbuchse besteht, muss so stabil sein, dass es durch den Druck des kompressiblen Fluids nahezu nicht komprimiert wird. Das kompressible Fluid ist vorzugsweise ein Gas, welches unter einem Druck steht.

Alternativ kann die Laufbuchse eine äußere Oberfläche und eine innere Oberfläche aufweisen, wobei nur die innere Oberfläche mit dem kompressiblen Fluid in Kontakt steht oder durch dieses druckbeaufschlagt ist und wobei die äußere Oberfläche mit dem Arbeitsfluid druckbeaufschlagbar ist.

Bei einer solchen Ausgestaltung ist von Vorteil, dass die Möglichkeit besteht, die Laufbuchse auf der der Gehäuseseite des Kolbens zugewandten Stirnseite durch einen Boden zu verschließen. Die Laufbuchse ist in einem solchen Fall im Wesentlichen topfförmig ausgebildet. Die Laufbuchse kann vollkommen gasundurchlässig ausgebildet sein. Das Innere der Laufbuchse ist von dieser selbst und dem Kolben begrenzt und dadurch gegenüber der Umgebung verschlossen. Die Laufbuchse kann dafür zum Beispiel aus einem metallischen Werkstoff bestehen. Durch eine solche Ausgestaltung der Laufbuchse braucht das Gehäuse nicht unbedingt gasundurchlässig ausgebildet zu sein; der Kolbenspeicher ist dadurch einfach und kostengünstig herstellbar und weist auch dann gleichbleibend gute Gebrauchseigenschaften während einer langen Gebrauchsdauer auf.

Je kleiner die Fläche im Inneren des Gehäuses ist, die mit dem kompressiblen Fluid aus dem Druckraum beaufschlagt ist, desto geringer ist die Gefahr, dass das kompressible Fluid durch das Gehäuse in die Umgebung diffundiert und sich dadurch die Gebrauchseigenschaften des Kolbenspeichers nachteilig verändern.

Insbesondere dann, wenn das Gehäuse einen Kunststoff aufweist oder aus einem Kunststoff besteht, kann das Gehäuse auf seiner Innenseite für gasförmige Medien diffusionsdicht ausgerüstet sein, zum Beispiel durch eine gasundurchlässige Beschichtung.

Die Größe der inneren Oberfläche, welche mit dem kompressiblen Fluid in Kontakt steht, könnte von der Verfahrstellung des Kolbens abhängen. Hierdurch kann ein Arbeitsfluid in das Gehäuse eindringen und den Kolben in das Gehäuse hineinschieben. Als Arbeitsfluid wird bevorzugt eine Flüssigkeit verwendet. Es ist jedoch auch denkbar, als Arbeitsfluid ein Gas zu verwenden.

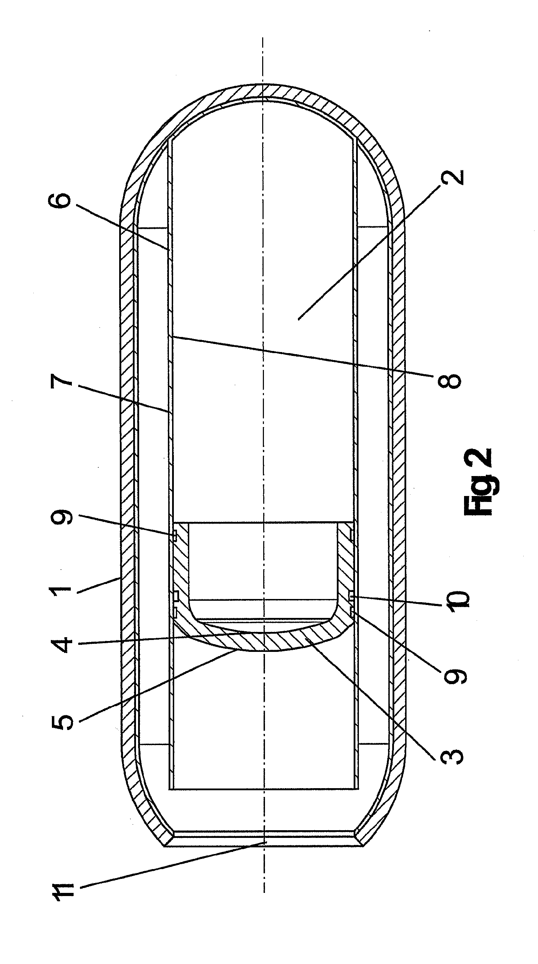

Die Größe der inneren Oberfläche, welche mit dem Arbeitsfluid in Kontakt steht, könnte von der Verfahrstellung des Kolbens abhängen. Durch diese konkrete Ausgestaltung kann das Arbeitsfluid die Laufbuchse druckentlasten, indem dieses nämlich von innen gegen die Laufbuchse drückt und dem Druck des kompressiblen Fluids oder dem Arbeitsfluid selbst entgegenwirkt, wie in Fig. 2 dargestellt. Dabei entspricht der Druck des kompressiblen Fluids im Druckraum annähernd dem Druck, unter dem das Arbeitsfluid steht. Das kompressible Fluid ist bevorzugt ein Gas.

Die Laufbuchse und das Gehäuse könnten konzentrisch angeordnet sein. Hierdurch ist eine einfache Fertigung des Kolbenspeichers möglich.

Die Laufbuchse und das Gehäuse könnten nicht konzentrisch angeordnet sein. Diese Ausgestaltung kann in gewissen Bauräumen vorteilhaft sein.

Die Laufbuchse könnte einen Kunststoff aufweisen oder aus einem Kunststoff bestehen. Hierdurch ist ein sehr leichter Kolbenspeicher realisierbar. Der Kunststoff ist bevorzugt faserverstärkt, insbesondere kohlefaserverstärkt und/ oder glasfaserverstärkt.

Die Laufbuchse könnte ein Metall aufweisen oder aus einem Metall bestehen. Die Laufbuchse kann so auch aggressiveren Medien wie beispielsweise Maschinenölen Stand halten. Das Metall ist bevorzugt ein Stahl.

Das Gehäuse könnte einen Kunststoff aufweisen oder aus einem Kunststoff bestehen. Hierdurch ist ein sehr leichter Kolbenspeicher realisierbar. Der Kunststoff ist bevorzugt faserverstärkt, insbesondere kohlefaserverstärkt und/ oder glasfaserverstärkt.

Das Gehäuse könnte ein Metall aufweisen oder aus einem Metall bestehen. Das Gehäuse kann so auch aggressiveren Medien wie beispielsweise Maschinenölen Stand halten. Das Metall ist bevorzugt Aluminium.

Die Laufbuchse und/oder das Gehäuse können bevorzugt gas-diffusionsdicht ausgebildet sein. Dazu können die Laufbuchse und/oder das Gehäuse, wenn sie nicht aus einem metallischen Werkstoff bestehen, zum Beispiel durch eine Beschichtung, speziell ausgerüstet sein.

Es könnten mehrere Laufbuchsen vorgesehen sein, innerhalb welchen Kolben verfahrbar sind bzw. geführt werden. In jeder Laufbuchse ist jeweils ein Kolben verfahrbar. Hierdurch kann ein einzelner Kolben selektiv angesteuert oder genutzt werden, während für mehrere Kolben ein einziger Druckraum vorgesehen ist.

### Kurzbeschreibung der Zeichnung

In der Zeichnung zeigt die
- Fig. 1: eine Schnittzeichnung eines ersten Ausführungsbeispiels eines Kolbenspeichers mit einem Gehäuse, welches einen Druckraum begrenzt, wobei innerhalb des Druckraums eine druckentlastete Laufbuchse aufgenommen ist, welche den Kolben führt,
- Fig. 2: eine Schnittzeichnung eines zweiten Ausführungsbeispiels eines Kolbenspeichers mit einem Gehäuse, bei dem das innerhalb des Druckraums befindliche, kompressible und gasförmige Fluid die Innenwand des Gehäuses nicht berührt,
- Fig. 3: eine Schnittzeichnung eines dritten Ausführungsbeispiels eines Kolbenspeichers mit einem Gehäuse, welches zwei Druckräume umschließt, wobei in jedem der beiden Druckräume jeweils ein differenzdruckabhängig in axialer Richtung verfahrbarer Kolben angeordnet ist.

### Ausführung der Erfindung

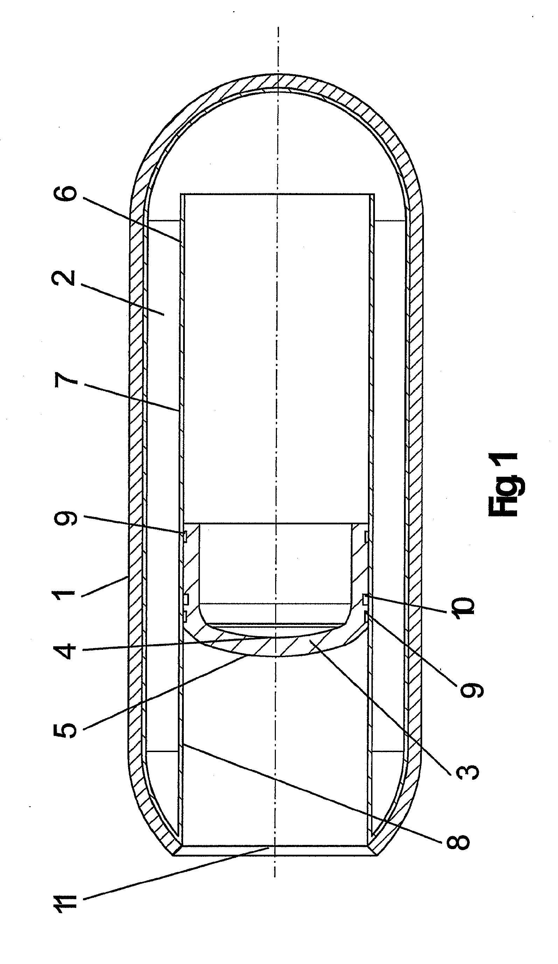

Fig.1 zeigt in einer Schnittansicht einen Kolbenspeicher, umfassend ein Gehäuse 1, welches einen Druckraum 2 begrenzt und einen verfahrbaren Kolben 3 aufnimmt, wobei im Druckraum 2 ein kompressibles Fluid aufgenommen ist, wobei der Kolben 3 eine Gehäuseseite 4 aufweist, welche dem Druckraum 2 zugewandt ist und wobei der Kolben 3 eine Arbeitsseite 5 aufweist, welche einem Arbeitsfluid zuwendbar ist, welches den Kolben 3 bewegen kann. Es ist eine Laufbuchse 6 vorgesehen, innerhalb welcher der Kolben 3 verfahrbar ist. Die Laufbuchse 6 führt den Kolben 3.

Das kompressible Fluid ist ein Gas. Das Gehäuse 1 hat eine Anschlussöffnung 11, damit Arbeitsfluid in das Gehäuse 1 eindringen und den Kolben 3 bewegen kann. Der Druckraum 2 wird von der Laufbuchse 6, dem Kolben 3 und dem Gehäuse 1 begrenzt und schließt ein variables Volumen ein.

Die Laufbuchse 6 ist vollständig innerhalb des Gehäuses 1 aufgenommen. Die Laufbuchse 6 ist als zylindrisches Rohr ausgebildet.

Die Laufbuchse 6 weist eine äußere Oberfläche 7 und eine innere Oberfläche 8 auf, wobei beide Oberflächen 7, 8 mit dem kompressiblen Fluid in Kontakt stehen oder durch dieses druckbeaufschlagt sind.

Die Größe der inneren Oberfläche 8, welche mit dem kompressiblen Fluid in Kontakt steht, hängt von der Verfahrstellung des Kolbens 3 ab. Die Größe der inneren Oberfläche 8, welche mit dem Arbeitsfluid in Kontakt steht, hängt ebenfalls von der Verfahrstellung des Kolbens 3 ab. Je weiter der Kolben 3 vom Arbeitsfluid in das Gehäuse 1 zurückgedrängt ist, desto mehr innere Oberfläche 8 steht mit dem Arbeitsfluid in Kontakt. Der Kolben 3 gleitet an der inneren Oberfläche 8 und wird durch die Laufbuchse 6 geführt.

Die Laufbuchse 6 und das Gehäuse 1 sind konzentrisch angeordnet. Die Laufbuchse 6 besteht aus einem Metall, nämlich aus Stahl. Das Gehäuse 1 besteht aus einem faserverstärkten Kunststoff. Der Kunststoff kann beispielsweise kohlefaserverstärkt oder glasfaserverstärkt sein. Zusätzlich ist auf der Innenseite des Gehäuses eine gasundurchlässige Einrichtung, wie zum Beispiel ein Gasdichter, ein Liner oder eine Beschichtung angebracht.

Am Kolben 3 sind zwei Führungsringe 9 angeordnet, axial zwischen welchen sich ein Dichtring 10 befindet. Der Kolben 3 ist auf seiner Arbeitsseite 5 konvex und auf seiner Gehäuseseite 4 konkav ausgebildet. Der Kolben 3 ist im Querschnitt U-förmig ausgebildet.

Das Gehäuse 1 und die Laufbuchse 6 sind konzentrisch zueinander angeordnet. Die äußere Oberfläche 7 der Laufbuchse 6 ist vollständig von Gas umgeben. Die innere Oberfläche 8 wird in Abhängigkeit von der Stellung des Kolbens 3 mit Gas oder mit Flüssigkeit beaufschlagt. Die innere Oberfläche 8 wird in Abhängigkeit von der Stellung des Kolbens 3 mehr mit Gas oder mehr mit Flüssigkeit beaufschlagt.

In Fig. 2 ist eine Schnittzeichnung eines zweiten Ausführungsbeispiels eines Kolbenspeichers mit einem Gehäuse 1 gezeigt, bei dem das im Druckraum 2 befindliche, kompressible und gasförmige Fluid die Innenwand des Gehäuses 1 nicht unmittelbar berührt.

Die Laufbuchse 6 ist topfförmig ausgebildet und auf der der Gehäuseseite 4 des Kolbens 3 zugewandten Stirnseite durch einen Boden verschlossen, der einen Teil des Gehäuses 1 bildet und auf der dem Druckraum 2 zugewandten Seite gasundurchlässig ausgebildet ist. Das kann durch eine gasundurchlässige Einrichtung geschehen, wie zum Beispiel einen Gasdichter, einen Liner oder eine Beschichtung. Die Laufbuchse 6 besteht im gezeigten Ausführungsbeispiel aus einem metallischen Werkstoff und ist dadurch vollkommen gasundurchlässig. Durch eine solche Ausgestaltung der Laufbuchse 6 braucht das Gehäuse 1 nicht ebenfalls gasundurchlässig ausgebildet zu sein. Dadurch, dass das kompressibles Fluid praktisch nicht aus dem Druckraum 2 entweichen kann, weist der Kolbenspeicher gleichbleibend gute Gebrauchseigenschaften während einer langen Gebrauchsdauer auf.

Die Laufbuchse 6 weist eine äußere Oberfläche 7 und eine innere Oberfläche 8 auf, wobei nur die innere Oberfläche 8 mit dem kompressiblen und gasförmigen Fluid aus dem Druckraum 2 in Kontakt steht und durch dieses druckbeaufschlagt ist. Die äußere Oberfläche 7 ist mit dem Arbeitsfluid, das hier durch ein Öl gebildet ist, druckbeaufschlagbar. Im gezeigten Ausführungsbeispiel ist keine Stelle an der Innenseite des Gehäuses 1 mit kompressiblem und gasförmigem Fluid aus dem Druckraum 2 in Berührung.

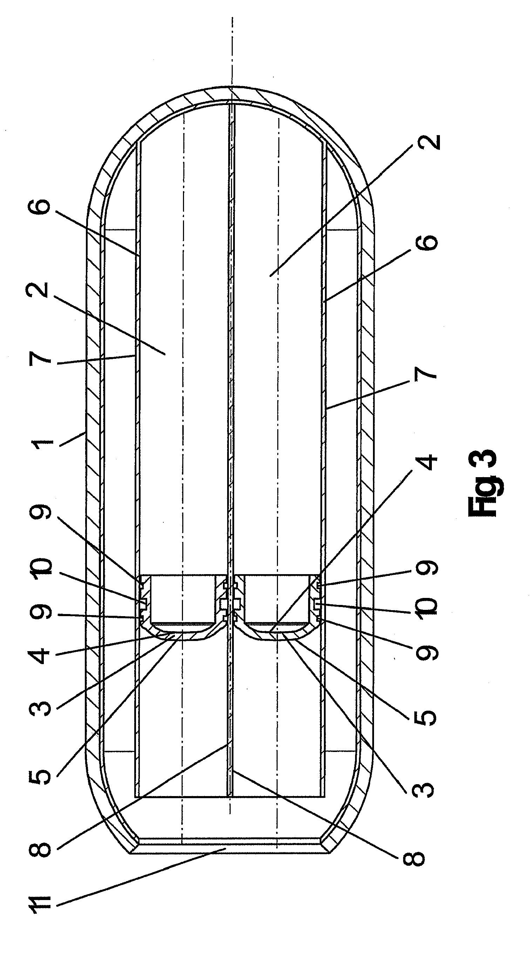

In Fig. 3 eine Schnittzeichnung eines dritten Ausführungsbeispiels eines Kolbenspeichers mit einem Gehäuse 1 gezeigt, welches zwei Druckräume 2 umschließt, wobei in jedem der beiden Druckräume 2 jeweils ein differenzdruckabhängig in axialer Richtung verfahrbarer Kolben 3 angeordnet ist.

Hierdurch kann bedarfsweise jeder einzelne Kolben 3 selektiv angesteuert und genutzt werden.

## Patentansprüche

1. Kolbenspeicher, umfassend ein Gehäuse (1), welches einen Druckraum (2) begrenzt und einen verfahrbaren Kolben (3) aufnimmt, wobei im Druckraum (2) ein kompressibles Fluid aufgenommen ist, wobei der Kolben (3) eine Gehäuseseite (4) aufweist, welche dem Druckraum (2) zugewandt ist und wobei der Kolben (3) eine Arbeitsseite (5) aufweist, welche einem Arbeitsfluid zuwendbar ist, welches den Kolben (3) bewegen kann,
**dadurch gekennzeichnet, dass** eine Laufbuchse (6) vorgesehen ist, innerhalb welcher der Kolben (3) verfahrbar ist.

2. Kolbenspeicher nach Anspruch 1, **dadurch gekennzeichnet, dass** die Laufbuchse (6) teilweise oder vollständig innerhalb des Gehäuses (1) aufgenommen ist.

3. Kolbenspeicher nach einem der Ansprüche 1 oder 2, **dadurch gekennzeichnet, dass** die Laufbuchse (6) eine äußere Oberfläche (7) und eine innere Oberfläche (8) aufweist, wobei beide Oberflächen (7, 8) mit dem kompressiblen Fluid in Kontakt stehen oder durch dieses druckbeaufschlagt sind.

4. Kolbenspeicher nach einem der Ansprüche 1 oder 2, **dadurch gekennzeichnet, dass** die Laufbuchse (6) eine äußere Oberfläche (7) und eine innere Oberfläche (8) aufweist, dass nur die innere Oberfläche (8) mit dem kompressiblen Fluid in Kontakt steht oder durch dieses druckbeaufschlagt ist und dass die äußere Oberfläche (7) mit dem Arbeitsfluid druckbeaufschlagbar ist.

5. Kolbenspeicher nach einem der Ansprüche 3 oder 4, **dadurch gekennzeichnet, dass** die Größe der inneren Oberfläche (8), welche mit dem kompressiblen Fluid in Kontakt steht, von der Verfahrstellung des Kolbens (3) abhängt.

6. Kolbenspeicher nach einem der Ansprüche 3 bis 5, **dadurch gekennzeichnet, dass** die Größe der inneren Oberfläche (8), welche mit dem Arbeitsfluid in Kontakt steht, von der Verfahrstellung des Kolbens (3) abhängt.

7. Kolbenspeicher nach einem der voranstehenden Ansprüche, **dadurch gekennzeichnet, dass** die Laufbuchse (6) und das Gehäuse (1) konzentrisch angeordnet sind.

8. Kolbenspeicher nach einem der Ansprüche 1 bis 6, **dadurch gekennzeichnet, dass** die Laufbuchse (6) und das Gehäuse (1) nicht konzentrisch angeordnet sind.

9. Kolbenspeicher nach einem der voranstehenden Ansprüche, **dadurch gekennzeichnet, dass** die Laufbuchse (6) einen Kunststoff aufweist oder aus einem Kunststoff besteht.

10. Kolbenspeicher nach einem der Ansprüche 1 bis 8, **dadurch gekennzeichnet, dass** die Laufbuchse (6) ein Metall aufweist oder aus einem Metall besteht.

11. Kolbenspeicher nach einem der voranstehenden Ansprüche, **dadurch gekennzeichnet, dass** das Gehäuse (1) einen Kunststoff aufweist oder aus einem Kunststoff besteht.

12. Kolbenspeicher nach einem der Ansprüche 1 bis 10, **dadurch gekennzeichnet, dass** das Gehäuse (1) ein Metall aufweist oder aus einem Metall besteht.

13. Kolbenspeicher nach einem der voranstehenden Ansprüche, **dadurch gekennzeichnet, dass** mehrere Laufbuchsen (6) vorgesehen sind, innerhalb welchen Kolben (3) verfahrbar sind.
